(19) **Europäisches Patentamt / European Patent Office / Office européen des brevets**

(11) **EP 4 183 629 B1**

(12) **EUROPEAN PATENT SPECIFICATION**

(45) Date of publication and mention
of the grant of the patent:
**14.02.2024 Bulletin 2024/07**

(21) Application number: **21210029.1**

(22) Date of filing: **23.11.2021**

(51) International Patent Classification (IPC):
**B60Q 1/10** *(2006.01)*    **B60T 8/32** *(2006.01)*
**B60T 13/66** *(2006.01)*    **B60T 17/22** *(2006.01)*

(52) Cooperative Patent Classification (CPC):
**B60Q 1/10; B60T 8/3205; B60T 13/662;**
**B60T 17/22;** B60Q 2300/112; B60Q 2300/114;
B60Q 2300/324

(54) **SYSTEM AND METHOD FOR ADJUSTING THE EMISSION DIRECTION OF A MOTOR-VEHICLE HEADLIGHT UNIT**

SYSTEM UND VERFAHREN ZUR EINSTELLUNG DER ABSTRAHLRICHTUNG EINER KRAFTFAHRZEUGSCHEINWERFEREINHEIT

SYSTÈME ET PROCÉDÉ DE RÉGLAGE DE LA DIRECTION D'ÉMISSION D'UNE UNITÉ DE PHARE DE VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.05.2023 Bulletin 2023/21**

(73) Proprietor: **C.R.F. Società Consortile per Azioni**
**10043 Orbassano (Torino) (IT)**

(72) Inventors:
  • **LARIZZA, Alfredo**
    **10043 Orbassano (Torino) (IT)**
  • **GRASSO, Alfio Antonino**
    **10043 Orbassano (Torino) (IT)**
  • **MASCIAVÉ, Vincenzo**
    **10043 Orbassano (Torino) (IT)**
  • **RICCIO, Raffaele**
    **10043 Orbassano (Torino) (IT)**
  • **SCALA, Stefano**
    **10043 Orbassano (Torino) (IT)**
  • **POGGI, Alessandro**
    **10043 Orbassano (Torino) (IT)**

(74) Representative: **Notaro, Giancarlo**
**Buzzi, Notaro & Antonielli d'Oulx S.p.A.**
**Corso Vittorio Emanuele II, 6**
**10123 Torino (IT)**

(56) References cited:
  DE-A1-102017 118 809    GB-A- 2 421 088
  JP-A- 2013 035 511        JP-B2- 6 636 997
  KR-A- 20150 062 323       US-A1- 2019 160 999
  US-B2- 10 001 361

EP 4 183 629 B1

**Description**

Field of the invention

The present invention relates to motor vehicles with headlight units provided with a system for adjusting the direction of emission. In particular, the invention regards motor vehicles of the type in which each headlight unit includes an electric actuator for adjusting the inclination of the light beam emitted by the headlight unit and an electronic control unit associated to the headlight unit and configured for receiving a control signal and for activating the aforesaid electric actuator so as to adjust the direction of emission of the headlight unit as a function of said control signal.

Prior art

Systems for automatic adjustment of the direction of emission of headlight units of a motor vehicle have been proposed and used for some time now. Examples of such systems are described in US 7599779 B2, US 10001361 B2, WO 2018/065692 A1, EP 3527453 A1, WO 2019/180331 A1, DE 10 2015 208795 B4, EP 2708417 B1, US 10471884 B2, EP 3 3527453 B1, EP 3689680 A1, WO 2018/091529 A1, DE 2020 19100544 U1, EP 3106346 A1, US 10676016 B2, EP 2963385 A1.

The solutions according to the prior art are all relatively complex and costly. There is felt the need for a solution that will instead be functional and reliable, but that at the same time is simple and inexpensive. This need has become a priority owing to the fact that there is currently envisaged the introduction of standards that render compulsory the presence of automatic-adjustment systems of the type referred to above on board the motor vehicle. In this situation, it has become imperative to provide an automatic-adjustment system not only in high-class cars, but also in motor vehicles of lower categories, for mass production, and consequently with the need to contain as much as possible the production costs and to simplify assembly operations.

Object of the invention

Hence, an object of the present invention is to provide a motor vehicle equipped with an adjustment system of the type referred to above that will be considerably simpler and less expensive than known systems while being anyhow efficent and reliable.

A further object of the invention is to provide a system for automatic adjustment of the direction of emission of a motor-vehicle headlight unit that will be light and compact.

A further object of the invention is to provide a system of the type referred to above that will require the use of a smaller number of components.

Summary of the invention

With a view to achieving one or more of the aforesaid objects, the motor vehicle according to the invention is characterized in that:

- the main control unit of the motor vehicle is configured for calculating the value of the pitch angle of the motor vehicle, defined as inclination of the longitudinal axis of the motor vehicle with respect to the ground, exclusively on the basis of the values of the longitudinal acceleration of the motor vehicle, of the speed of the motor vehicle, and of the angle of slope of the road, and for generating the aforesaid control signal for the control unit of the headlight unit on the basis of the aforesaid calculated value of the pitch angle of the motor vehicle; and
- the main control unit of the motor vehicle is configured for receiving the information on said value of the longitudinal acceleration of the motor vehicle from the control unit of the motor-vehicle airbag system and for receiving information on the aforesaid values of the speed of the motor vehicle and of the angle of slope of the road from the control unit of the motor-vehicle braking system.

Thanks to the aforesaid characteristics, in the motor vehicle according to the invention, control of the direction of emission of the headlight unit can be obtained without the need to provide on the motor vehicle a control unit dedicated to the above function and without providing dedicated sensors for detecting the longitudinal acceleration of the motor vehicle, the speed of the motor vehicle, and the angle of slope of the road. Such information is in fact obtained, in the motor vehicle according to the invention, exploiting what is already available in the control unit with which the motor vehicle is provided for controlling the airbags and for controlling the braking system. Moreover, the system according to the invention is further simplified by the fact that calculation of the pitch angle of the motor vehicle, upon which adjustment of the headlight unit depends, is based only upon the values of longitudinal acceleration of the motor vehicle, speed of

EP 4 183 629 B1

the motor vehicle, and angle of slope of the road.

In the preferred embodiment, the main control unit is configured for performing the calculation of the pitch angle of the motor vehicle only when the speed of the vehicle detected by said braking-system control unit is below a threshold value.

Preferably, moreover, the main control unit is configured for performing the calculation of the pitch angle of the motor vehicle after a pre-set delay with respect to when the speed drops below the threshold value in order to allow the oscillations of pitch of the motor vehicle to vanish.

In a preferred embodiment, the main control unit is configured for performing the calculation of the pitch angle of the motor vehicle on the basis of the following equation:

$$(Pitch)_{deg} = \left(\tan^{-1}\left(\frac{Long_F}{\sqrt{g^2 - Long_F{}^2}}\right)\right)_{rad} \cdot \frac{180}{\pi}$$

where:

$(Pitch)_{deg}$ is the pitch angle expressed in degrees, with respect to a horizontal plane,
$Long_F$ is a filtered value of the longitudinal acceleration of the motor vehicle detected by the control unit of the motor-vehicle airbags, and
"g" is the acceleration of gravity.

In the preferred embodiment, the main control unit is configured for calculating a value of the pitch angle with respect to ground by subtracting from the calculated value of the pitch angle a filtered value of the angle of slope of the road detected by the braking-system control unit. The main control unit is moreover configured for sending a control signal to the control unit of the headlight unit that is a function of the angular difference between said value of the pitch angle with respect to ground and an offset value corresponding to the initial value of the pitch angle determined in a step of calibration of the headlight unit on the motor vehicle.

Preferably, the aforesaid main control unit is configured for obtaining said filtered value ($Long_F$) of the longitudinal acceleration of the motor vehicle with an iterative calculation on the basis of the following equation:

$$Long_F[\text{N} \cdot \text{T}] = \alpha \cdot Long_F[(\text{N} - 1) \cdot \text{T}] + (1 - \alpha) \cdot Long [\text{N} \cdot \text{T}]$$

where:

$\alpha$ is a filtering parameter in the range between 0.75 and 1.00;
N is the iteration number; and
T is the time of sampling of the value of the longitudinal acceleration (Long) detected by the airbag control unit.

Once again preferably, said main control unit is configured for obtaining said filtered value ($Slope_F$) of the angle of slope (Slope) of the road detected by the braking-system control unit by means of an iterative calculation based upon the following equation:

$$Slope_F[\text{N} \cdot \text{T}] = \alpha \cdot Slope_F[(\text{N} - 1) \cdot \text{T}] + (1 - \alpha) \cdot Slope[\text{N} \cdot \text{T}]$$

where N is the iteration number and T is the time of sampling of the value of the angle of slope of the road (Slope) detected by the braking-system control unit.

Once again according to a preferred characteristic, the main control unit is configured for generating a control signal that contains a percentage value indicating the position of adjustment of the light beam, said percentage value being determined on the basis of a table that assigns different percentage values to different ranges of the angular difference mentioned above, each percentage value corresponding to a respective range of values of said angular difference.

Once again with reference to the preferred example of embodiment, the main control unit is configured for implementing a state-machine strategy, comprising:

- a START-UP state, which is activated at key-on of the motor vehicle, where assumed as value of the angle of slope of the road is the last value stored before the previous key-off of the motor vehicle;
- a RUN state, which is activated when the speed of the vehicle is lower than a threshold value, where the main control unit issues the aforesaid control signal on the basis of the aforesaid calculation and stores the resulting position of adjustment of the light beam of the headlight unit and the value of the angle of slope of the road;
- an IDLE state, enabled when the speed of the vehicle is higher than the aforesaid threshold value, where the main control unit maintains the last adjusted position of the light beam of the headlight unit; and
- a FAULT state, enabled when a fault condition is present, where the main control unit adjusts the position of the light beam of the headlight unit at a pre-defined safety value and stores it as last adjusted position.

The subject of the invention is also the control method implemented in the motor vehicle according to the invention.

Detailed description of a preferred embodiment

Further characteristics and advantages of the invention will emerge from the ensuing description, with reference to the annexed drawings, which are provided purely by way of non-limiting example and in which:

- Figure 1 is a schematic lateral view of a motor vehicle equipped with the system according to the invention;
- Figure 2 is a block diagram of the system according to the invention; and
- Figure 3 is a block diagram of the state-machine strategy implemented by the system according to the invention.

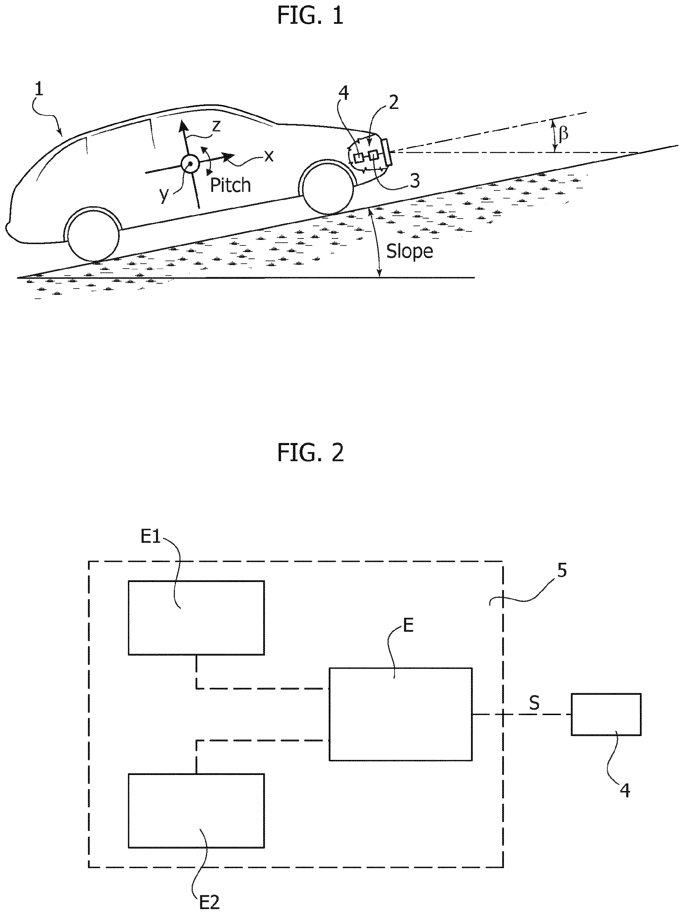

In the drawings, the number 1 designates as a whole a motor vehicle of any type comprising two front headlight units (just one of which is illustrated schematically), associated to which is the adjustment system according to the invention. Figure 1 shows a reference system X, Y, Z, where the axis X coincides with the longitudinal axis of the motor vehicle, the axis Y is a horizontal axis orthogonal to the axis X, and the axis Z is the axis orthogonal to the plane of the road.

Each headlight unit is equipped with an adjustment device of any known type, which enables adjustment of the angle $\beta$ formed by the axis of the emitted light beam. For this reason, the details of construction of this device are not described or illustrated, both in so far as, taken in themselves, they do not fall within the framework of the present invention, and in order to simplify the drawings.

For the purposes of the present description, it should simply be pointed out that the adjustment device with which the headlight unit 2 is provided comprises an electric actuator 3 (typically an electric motor) that is to control adjustment of the direction of emission of the light beam and an electronic control unit 4 (which can be integrated in the actuator 3), forming part of the headlight unit 2, which is to drive the electric motor 3 as a function of a control signal sent thereto by the adjustment system with which the motor vehicle is provided. The electronic control unit 4 forming part of the headlight unit 2 is also represented in Figure 2. This figure illustrates as a whole the adjustment system 5, with which the motor vehicle 1 is provided, that is to send to the control unit 4 of the headlight unit 2 a control signal S, upon which adjustment of the beam emitted by the headlight unit depends.

In the system according to the invention, the signal S is generated by the main electronic control unit E of the motor vehicle.

As will emerge in detail in what follows, the main control unit E of the motor vehicle generates the control signal S following upon a calculation based only on the value of the longitudinal acceleration of the motor vehicle 1 (i.e., the acceleration in the direction X), of the value V of the speed of the motor vehicle, and of the value Slope of the angle of slope of the road 6.

In the motor vehicle according to the invention, the main control unit E receives the information on the value (Long) of the longitudinal acceleration from the electronic control unit E1 provided on the motor vehicle for controlling the airbags mounted on board the motor vehicle. Moreover, the main control unit E is configured for receiving the information on the speed V of the motor vehicle and on the angle Slope of slope of the road from the electronic control unit E2 provided on the motor vehicle for controlling the braking system.

Neither the motor-vehicle airbag system nor the motor-vehicle braking system are described or illustrated herein since they can be obtained in any known way. The airbag control system is of any known type, including an electronic control unit E1 that has available the information regarding the longitudinal acceleration of the motor vehicle. The braking system is of any known type, including an electronic control unit E2 that has available information regarding the speed of the motor vehicle and the angle of slope of the road.

In the preferred embodiment of the invention, the electronic control unit E is configured for obtaining a filtered value ($Long_F$) of the longitudinal acceleration of the motor vehicle with an iterative calculation on the basis of the following equation:

$$Long_F[N \cdot T] = \alpha \cdot Long_F[(N-1) \cdot T] + (1-\alpha) \cdot Long \, [N \cdot T]$$

where:

α is a filtering parameter, in the range between 0.75 and 1.00;
N is the iteration number; and
T is the time of sampling of the value of the longitudinal acceleration (Long) detected by the airbag control unit.

Once again preferably, said main control unit is configured for obtaining a filtered value (Slope_F) of the angle of slope (Slope) of the road detected by the braking-system control unit (E2) by means of an iterative calculation based upon the following equation:

$$Slope_F[N \cdot T] = \alpha \cdot Slope_F[(N-1) \cdot T] + (1-\alpha) \cdot Slope[N \cdot T]$$

where N is the iteration number, and T is the time of sampling of the value of the angle of slope of the road (Slope) detected by the braking-system control unit.

In the system according to the invention, the main control unit E is configured for performing a calculation of the pitch angle (Pitch in Figure 1) of the motor vehicle, i.e., the angle of rotation about the transverse axis Y, only when the speed of the vehicle detected by the control unit E2 of the motor-vehicle braking system is below a threshold value.

Preferably, moreover, the calculation is not performed by the main control unit E until the vehicle has dissipated mechanically the residual oscillation of pitch. Preferably, the control unit E is consequently configured for performing the calculation of the pitch angle Pitch only after a pre-set delay has elapsed with respect to when the speed drops below the threshold value to allow the oscillation of pitch of the motor vehicle to vanish.

In the example of the preferred embodiment, the main control unit is configured for performing the calculation of the pitch angle of the motor vehicle with respect to the horizontal plane (Pitch) on the basis of the following equation:

$$(Pitch)_{deg} = \left( \tan^{-1} \left( \frac{Long_F}{\sqrt{g^2 - Long_F{}^2}} \right) \right)_{rad} \cdot \frac{180}{\pi} \quad (A)$$

where:

$(Pitch)_{deg}$ is the pitch angle, expressed in degrees, with respect to a horizontal plane;
$Long_F$ is a filtered value of the longitudinal acceleration of the motor vehicle detected by the control unit of the motor-vehicle airbags (E1); and
g is the acceleration of gravity.

The value of the pitch angle with respect to the road (PitchAngle) to be considered for adjustment of the headlight unit is calculated using the equation:

$$PitchAngle = (Pitch)_{deg} - (Slope_F)_{deg} \quad (B)$$

Consequently, in the system according to the invention, the main control unit E is configured for calculating the value of the pitch angle with respect to the road by subtracting from the calculated value of the pitch angle with respect to the road a filtered value (in the way that has been seen) of the angle of slope of the road detected by the braking-system control unit.

The main control unit E is configured for sending a control signal S to the control unit 4 of the headlight unit 2 that is a function of the angular difference (DeltaPitch) between the aforesaid value of the pitch angle with respect to the ground and an offset value, corresponding to an initial value of the pitch angle determined in a step of calibration of the headlight unit mounted on the motor vehicle, as follows:

$$DeltaPitch = PitchAngle - Offset \quad (C)$$

where Offset is a value that is calculated after initial installation of the system or after each maintenance intervention that regards an electronic control unit. The value Offset is stored in the non-volatile memory of the control unit E and is obtained by applying the following equation:

$$Offset = PitchAngle_{calibration}$$

where $PitchAngle_{calibration}$ is a value that is obtained during the calibration process.

In one example, the calibration process, which is aimed at obtaining the offset value, is carried out in the following conditions:

- the vehicle is parked on a plane surface;
- the light beam of the headlight is adjusted mechanically on the basis of current standards;
- care is taken to prevent any vibration of the system during the calibration process; and
- the value of the pitch angle (Pitch) is determined, and this angle is used as offset.

The algorithm that carries out the calibration process is the following:

- for a time equal to $Delay_{short}$, the value of the longitudinal acceleration obtained from the control unit E1 is read and the filtering strategy is applied;
- the pitch angle is calculated applying Eq. (A) above;
- the calculated value is assumed as the value Offset;
- the value Offset is stored in the non-volatile memory of the control unit E.

According to a further characteristic of the invention, the calculated angular variation of the pitch angle (DeltaPitch) is converted into a percentage value that represents the position of adjustment of the headlight unit.

Preferably, in the system according to the invention, the main control unit is configured for generating a control signal S that contains a percentage value representing the position of adjustment of the light beam of the headlight unit, said percentage value being determined on the basis of a table that assigns different percentage values to different ranges of the angular difference DeltaPitch, each percentage value corresponding to the respective range of values DeltaPitch.

For instance, a conversion table may be used of the type appearing below:

| Ranges of DeltaPitch | Adjustment (%) |
|---|---|
| *DeltaPitch = 0° (Offset reference)* | *90%* |
| *0ᶜ < Delta Pitch < 0° 17'* | *85%* |
| *0° 17' ≤ DeltaPitch < 0° 34'* | *80%* |
| *0° 34' ≤ DeltaPitch < 0° 51'* | *75%* |
| *0° 51' ≤ DeltaPitch < 1° 8'* | *70%* |
| *1° 8' ≤ DeltaPitch < 1° 24'* | *65%* |
| *1° 24' ≤ DeltaPitch < 1° 41'* | *60%* |
| *1° 41' ≤ DeltaPitch < 1°58'* | *55%* |
| *1° 58' ≤ DeltaPitch < 2° 15'* | *50%* |
| *DeltaPitch ≥ 2° 15'* | *45%* |

According to a further characteristic of the invention, the main control unit E is configured for implementing a state-machine strategy comprising:

- a START-UP state, which is activated at key-on of the motor vehicle, where assumed as value of the angle of slope of the road is the last value stored before the previous key-off of the motor vehicle;
- a RUN state, which is activated when the speed of the vehicle is lower than a threshold value, where the main control unit issues the aforesaid control signal on the basis of the calculation of the pitch angle and stores the resulting position of adjustment of the light beam of the headlight unit and the value of the angle of slope of the road;

- an IDLE state, which is activated when the speed of the vehicle is higher than the aforesaid threshold value, where the main control unit E maintains the last adjusted position of the light beam of the headlight unit 2; and
- a FAULT state, which is activated when a fault condition is present, where the main control unit adjusts the position of the light beam of the headlight unit at a pre-defined safety value, and stores it as last adjusted position.

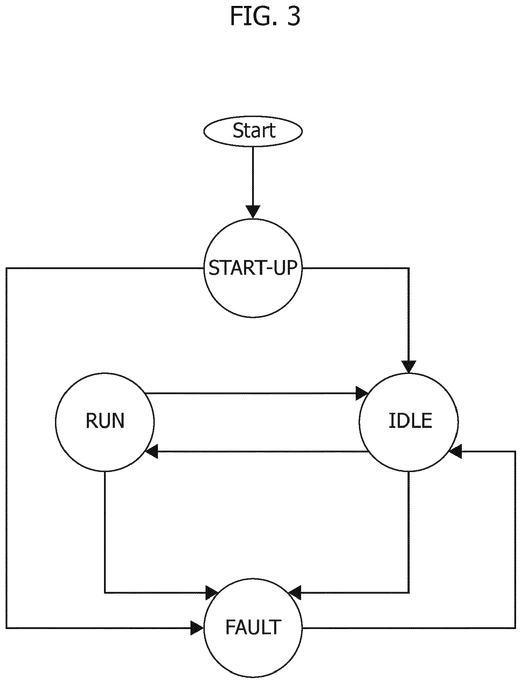

A block diagram of the state machine is illustrated in Figure 3.

With reference to this figure, during the START-UP state, the system performs the following operations:

- for a time equal to $Delay_{short}$, the longitudinal-acceleration variable obtained by the airbag control unit E1 is detected and filtering is applied thereto;
- Equations. (A) and (B) above are applied for static calculation of the pitch angle, replacing the value $Slope_F$ with the last value stored $Slope_{last}$;
- Equation (C) above is applied for calculation of the DeltaPitch; and
- conversion from the pitch angle to the percentage adjustment is applied using the conversion table.

During the RUN state, the system performs the following operations:

- for a time equal to $Delay_{long}$, the variables longitudinal acceleration and angle of slope of the road that are obtained via the electronic control units E1 and E2 are read and filtering is applied thereto;
- Equations. (A) and (B) are applied for static calculation of the pitch angle;
- Equation (C) is applied for calculation of the value DeltaPitch;
- conversion from the pitch angle to the percentage adjustment is applied using the conversion table;
- the value of the position of adjustment $POS_{last}$ is stored;
- the value $Slope_F$ is stored as $Slope_{last}$; and
- the value $POS_{last}$ is set as output value.

During the IDLE state, the system considers as output value the value $POS_{last}$.

During the FAULT state, the system performs the following operations:

- it stores the value $POS_{fault}$ in $POS_{last}$; and
- it fixes the value $POS_{last}$ as output.

In the system according to the invention, the conditions for a change of state are controlled in real time, and the change of state has priority over any further operation. If there arises the need for a change of state and the operations being carried out in the current state are still in progress, these operations are aborted.

In one example, typical values for the parameters discussed above are the following:

$\alpha$: 0.99
threshold speed value ($speed_{lim}$): 0.5 km/h
$Delay_{short}$: 2"
$Delay_{long}$: 5"

With reference once again to Figure 3, in this example at starting of the motor the system is in the START-UP state. When the speed of the vehicle exceeds the threshold value (for example, 0.5 km/h), the system passes into the IDLE state. From the IDLE state the system passes into the RUN state when the speed drops below the threshold value and returns into the IDLE state when the speed exceeds the threshold value. Both in the START-UP state and in the IDLE state as well as in the RUN state, if a fault occurs, the system passes into the FAULT state. When the fault is no longer present, the system returns from the FAULT state to the IDLE state.

As emerges clearly from the foregoing description, the system according to the invention provides the possibility of obtaining automatic adjustment of the headlight unit with extremely simple means, exploiting the systems on board the vehicle, without requiring a dedicated controller and dedicated sensors.

Of course, without prejudice to the principle of the invention, the embodiments and the details of construction may vary with respect to what has been described and illustrated herein purely by way of example, without thereby departing from the present invention, as defined in the annexed claims.

**Claims**

1. A motor vehicle, comprising at least one headlight unit (2) that includes:

   - an electric actuator (3) for adjusting the inclination of the light beam emitted by the headlight unit; and
   - an electronic control unit (4) associated to the headlight unit (2) and configured for receiving a control signal (S) and for activating the electric actuator (3) of the headlight unit (2) in such a way as to adjust the inclination of the light beam as a function of said control signal (S),

   wherein the motor vehicle further comprises:

   - a main electronic control unit (E) of the motor vehicle;
   - a system of one or more motor-vehicle airbags, including an airbag electronic control unit (E1); and
   - a motor-vehicle braking system, including a braking-system electronic control unit (E2), wherein
   - the main control unit (E) of the motor vehicle is configured for obtaining information on a value of the longitudinal acceleration (Long) of the motor vehicle from the airbag control unit (E1) and for obtaining information on a value of the speed of the motor vehicle (V) from the control unit of the motor-vehicle braking system (E2),

   said vehicle being **characterized in that**:

   - the main control unit (E) of the motor vehicle is configured for calculating the value of the pitch angle (PitchAngle) of the motor vehicle, defined as inclination of the longitudinal axis (X) of the motor vehicle with respect to the road (6), exclusively on the basis of the values of the longitudinal acceleration (Long) of the motor vehicle, of the speed (V) of the motor vehicle, and of the angle of slope (Slope) of the road, and for generating said control signal (S) for the control unit (4) of the headlight unit (2) on the basis of said calculated value of the pitch angle (PitchAngle) of the motor vehicle;
   - the main control unit (E) of the motor vehicle is configured for obtaining information on said value of the angle of slope (Slope) of the road from the control unit of the motor-vehicle braking system (E2).

2. The motor vehicle according to Claim 1, **characterized in that** the main control unit (E) is configured for performing the calculation of the pitch angle (PitchAngle) of the motor vehicle only when the speed of the vehicle detected by said braking-system control unit (E2) is below a threshold value.

3. The motor vehicle according to Claim 2, **characterized in that** the main control unit (E) is configured for performing the calculation of the pitch angle (PitchAngle) of the motor vehicle after a pre-set delay with respect to when the speed drops below the threshold value to allow the oscillations of pitch of the motor vehicle to vanish.

4. The motor vehicle according to Claim 3, **characterized in that** the main control unit (E) is configured for performing the calculation of the pitch angle (Pitch) of the motor vehicle with respect to a horizontal plane on the basis of the following equation:

$$(Pitch)_{deg} = \left( \tan^{-1} \left( \frac{Long_F}{\sqrt{g^2 - Long_F{}^2}} \right) \right)_{rad} \cdot \frac{180}{\pi}$$

   where:

   $(Pitch)_{deg}$ is the pitch angle expressed in degrees, with respect to a horizontal plane;
   $Long_F$ is a filtered value of the longitudinal acceleration of the motor vehicle detected by the control unit of the motor-vehicle airbags (E1); and
   g is the acceleration of gravity.

5. The motor vehicle according to Claim 1, **characterized in that** the main control unit (E) is configured for calculating a value of the pitch angle (PitchAngle) with respect to the road by subtracting from the calculated value of the pitch angle (Pitch) a filtered value ($Slope_F$) of the angle of slope (Slope) of the road detected by the braking-system control unit (E2), and **in that** the main control unit (E) is moreover configured for sending a control signal (S) to the control unit (4) of the headlight unit (2) that is a function of the angular difference (DeltaPitch) between said value of the pitch angle with respect to the road (PitchAngle) and an offset value corresponding to an initial value of the pitch angle determined in a step of calibration of the headlight unit (2) mounted on the motor vehicle.

6. The motor vehicle according to Claim 4, **characterized in that** said main control unit (E) is configured for obtaining said filtered value ($Long_F$) of the longitudinal acceleration of the motor vehicle with an iterative calculation on the basis of the following equation:

$$Long_F[\text{N} \cdot \text{T}] = \alpha \cdot Long_F[(\text{N} - 1) \cdot \text{T}] + (1 - \alpha) \cdot Long\ [\text{N} \cdot \text{T}]$$

where:

$\alpha$ is a filtering parameter, in the range between 0.75 and 1.00;
N is the iteration number; and
T is the time of sampling of the value of the longitudinal acceleration (Long) detected by the airbag control unit (E1).

7. The motor vehicle according to Claim 5, **characterized in that** said main control unit (E) is configured for obtaining said filtered value ($Slope_F$) of the angle of slope (Slope) of the road detected by the braking-system control unit (E2) by means of an iterative calculation based upon the following equation:

$$Slope_F[\text{N} \cdot \text{T}] = \alpha \cdot Slope_F[(\text{N} - 1) \cdot \text{T}] + (1 - \alpha) \cdot Slope[\text{N} \cdot \text{T}]$$

where N is the iteration number and T is the time of sampling of the value of the angle of slope of the road (Slope) detected by the braking-system control unit (E2).

8. The motor vehicle according to Claim 1, **characterized in that** the main control unit (E) is configured for generating a control signal (S) that contains a percentage value representing the position of adjustment of the headlight unit, said percentage value being determined on the basis of a table that assigns different percentage values to different ranges of the aforesaid angular difference (DeltaPitch), each percentage value corresponding to a respective range of values of said angular difference (DeltaPitch).

9. The motor vehicle according to any one of the preceding claims, **characterized in that** the main control unit is configured for implementing a state-machine strategy, comprising:

   - a START-UP state, which is activated at key-on of the motor vehicle, where assumed as value of the angle of slope of the road is the last value stored before the previous key-off of the motor vehicle;
   - a RUN state, which is activated when the speed of the vehicle is lower than a threshold value, where the main control unit (E) issues the aforesaid control signal (S) on the basis of the aforesaid calculation and stores the resulting position of adjustment of the headlight unit (2) and the value of the angle of slope (Slope) of the road;
   - an IDLE state, which is activated when the speed of the vehicle is higher than the aforesaid threshold value, where the main control unit maintains the last adjusted position of the headlight unit (2); and
   - a FAULT state, which is activated when a fault condition is present, where the main control unit adjusts the position of the headlight unit (2) at a pre-defined safety value and stores it as last adjusted position.

10. A method for controlling the direction of emission of a headlight unit (2) of a motor vehicle,

   wherein the headlight unit (2) includes:

   - an electric actuator (3) for adjusting the inclination of the light beam emitted by the headlight unit; and
   - an electronic control unit (4) associated to the headlight unit (2) and configured for receiving a control signal (S) and for activating the electric actuator (3) of the headlight unit (2) in such a way as to adjust the inclination of the light beam as a function of said control signal (S),

   and wherein the motor vehicle comprises:

- a main electronic control unit (E) of the motor vehicle;
- a system of one or more motor-vehicle airbags, including an airbag electronic control unit (E1); and
- a motor-vehicle braking system, including a braking-system electronic control unit (E2),
- wherein the main control unit (E) of the motor vehicle obtains information on a value of the longitudinal acceleration (Long) of the motor vehicle from the airbag control unit (E1) and obtains information on a value of the speed of the motor vehicle (V) from the control unit of the motor-vehicle braking system (E2),

said method being **characterized in that** it comprises:

- calculating, via said main control unit (E) of the motor vehicle, the value of the pitch angle (PitchAngle) of the motor vehicle, defined as inclination of the longitudinal axis (X) of the motor vehicle with respect to the road (6), exclusively on the basis of the values of the longitudinal acceleration (Long) of the motor vehicle, of the speed (V) of the motor vehicle, and of the angle of slope (Slope) of the road; and
- generating said control signal (S) for the control unit (4) of the headlight unit (2) on the basis of said calculated value of the pitch angle (PitchAngle) of the motor vehicle, and
- wherein the main control unit (E) of the motor vehicle obtains information on said value of the angle of slope (Slope) of the road from the control unit of the motor-vehicle braking system (E2).

11. The method according to Claim 10, **characterized in that** the calculation of the pitch angle (PitchAngle) of the motor vehicle is made by the main control unit (E) only when the speed of the vehicle detected by said braking-system control unit (E2) is below a threshold value.

12. The method according to Claim 11, **characterized in that** calculation of the pitch angle (PitchAngle) of the motor vehicle is made by the main control unit (E) after a pre-set delay with respect to when the speed drops below the threshold value in order to allow the oscillations of pitch of the motor vehicle to vanish.

13. The method according to Claim 12, **characterized in that** the calculation of the pitch angle (Pitch) of the motor vehicle with respect to a horizontal plane is made by the main control unit (E) on the basis of the following equation:

$$(Pitch)_{deg} = \left( \tan^{-1} \left( \frac{Long_F}{\sqrt{g^2 - Long_F{}^2}} \right) \right)_{rad} \cdot \frac{180}{\pi}$$

where:

$(Pitch)_{deg}$ is the pitch angle expressed in degrees, with respect to a horizontal plane;
$Long_F$ is a filtered value of the longitudinal acceleration of the motor vehicle detected by the control unit of the motor-vehicle airbags (E1); and
g is the acceleration of gravity.

14. The method according to Claim 10, **characterized in that** it comprises calculating, via the main control unit (E), a value of the pitch angle (PitchAngle) with respect to the road by subtracting from the calculated value of the pitch angle (Pitch) a filtered value ($Slope_F$) of the angle of slope (Slope) of the road detected by the braking-system control unit (E2), and **in that** said method further comprises sending, via the main control unit (E), a control signal (S) to the control unit (4) of the headlight unit (2) that is a function of the angular difference (DeltaPitch) between said value of the pitch angle with respect to the road (PitchAngle) and an offset value corresponding to an initial value of the pitch angle determined in a step of calibration of the headlight unit (2) mounted on the motor vehicle.

15. The method according to Claim 13, **characterized in that** it comprises obtaining, via the main control unit (E), said filtered value ($Long_F$) of the longitudinal acceleration (Long) of the motor vehicle with an iterative calculation on the basis of the following equation:

$$Long_F[\mathrm{N} \cdot \mathrm{T}] = \alpha \cdot Long_F[(\mathrm{N} - 1) \cdot \mathrm{T}] + (1 - \alpha) \cdot Long\,[\mathrm{N} \cdot \mathrm{T}]$$

where:

α is a filtering parameter, in the range between 0.75 and 1.00;
N is the iteration number; and
T is the time of sampling of the value of the longitudinal acceleration (Long) detected by the airbag control unit (E1).

16. The method according to Claim 14, **characterized in that** it comprises obtaining, via the main control unit (E), said filtered value (Slope_F) of the angle of slope (Slope) of the road detected by the braking-system control unit (E2) by means of an iterative calculation based upon the following equation:

$$Slope_F[\text{N} \cdot \text{T}] = \alpha \cdot Slope_F[(\text{N} - 1) \cdot \text{T}] + (1 - \alpha) \cdot Slope[\text{N} \cdot \text{T}]$$

where N is the iteration number and T is the time of sampling of the value of the angle of slope of the road (Slope) detected by the braking-system control unit (E2).

17. The method according to Claim 10, **characterized in that** the main control unit (E) is configured for generating a control signal (S) that contains a percentage value representing the position of adjustment of the headlight unit, said percentage value being determined on the basis of a table that assigns different percentage values to different ranges of the aforesaid angular difference (DeltaPitch), each percentage value corresponding to a respective range of values of said angular difference (DeltaPitch).

18. The method according to any one of the claims 10-17, **characterized in that** it comprises implementing, via the main control unit (E), a state-machine strategy, comprising:

- a START-UP state, which is activated immediately at key-on of the motor vehicle, where assumed as value of the angle of slope of the road is the last value stored before the previous key-off of the motor vehicle;
- a RUN state, which is activated when the speed of the vehicle is lower than a threshold value, where the main control unit (E) issues the aforesaid control signal (S) on the basis of the aforesaid calculation and stores the resulting position of adjustment of the headlight unit (2) and the value of the angle of slope (Slope) of the road;
- an IDLE state, which is activated when the speed of the vehicle is higher than the aforesaid threshold value, where the main control unit maintains the last adjusted position of the headlight unit (2); and
- a FAULT state, which is activated when a fault condition is present, where the main control unit adjusts the position of the headlight unit (2) at a pre-defined safety value and stores it as last adjusted position.

**Patentansprüche**

1. Kraftfahrzeug, umfassend mindestens eine Scheinwerfereinheit (2), die umfasst:

- einen elektrischen Stellantrieb (3) zum Einstellen der Neigung des von der Scheinwerfereinheit abgestrahlten Lichtbündels; und
- eine elektronische Steuereinheit (4), die mit der Scheinwerfereinheit (2) verbunden und dazu eingerichtet ist, ein Steuersignal (S) zu empfangen und den elektrischen Stellantrieb (3) der Scheinwerfereinheit (2) zum Einstellen der Neigung des Lichtbündels in Abhängigkeit von dem Steuersignal (S) zu aktivieren,

wobei das Kraftfahrzeug ferner umfasst:

- eine elektronische Hauptsteuereinheit (E) des Kraftfahrzeugs,
- ein System aus einem oder mehreren Kraftfahrzeug-Airbags, umfassend eine elektronische Airbag-Steuereinheit (E1); und
- eine Kraftfahrzeug-Bremsanlage, umfassend eine elektronische Bremsanlagen-Steuereinheit (E2), wobei
- die Hauptsteuereinheit (E) des Kraftfahrzeugs dazu eingerichtet ist, von der Airbag-Steuereinheit (E1) Informationen über einen Wert der Längsbeschleunigung (Long) des Kraftfahrzeugs zu erhalten und von der Steuereinheit (E2) der Kraftfahrzeug-Bremsanlage Informationen über einen Wert der Geschwindigkeit (V) des Kraftfahrzeugs zu erhalten,

wobei das Fahrzeug **dadurch gekennzeichnet ist, dass**:

- die Hauptsteuereinheit (E) des Kraftfahrzeugs dazu eingerichtet ist, den Wert des Nickwinkels (PitchAngle) des Kraftfahrzeugs, der als Neigung der Längsachse (X) des Kraftfahrzeug gegenüber der Straße (6) definiert ist, ausschließlich auf der Grundlage der Werte der Längsbeschleunigung (Long) des Kraftfahrzeugs, der Geschwindigkeit (V) des Kraftfahrzeugs und des Steigungswinkels (Slope) der Straße zu berechnen und das Steuersignal (S) für die Steuereinheit (4) der Scheinwerfereinheit (2) auf der Grundlage dieses berechneten Werts des Nickwinkels (PitchAngle) des Kraftfahrzeugs zu erzeugen,

- die Hauptsteuereinheit (E) des Kraftfahrzeugs dazu eingerichtet ist, Informationen über den Wert des Steigungswinkels (Slope) der Straße von der Steuereinheit (E2) der Bremsanlage des Kraftfahrzeugs zu erhalten.

2. Kraftfahrzeug nach Anspruch 1, **dadurch gekennzeichnet, dass** die Hauptsteuereinheit (E) dazu eingerichtet ist, die Berechnung des Nickwinkels (PitchAngle) des Kraftfahrzeugs nur dann auszuführen, wenn die von der Bremsanlagen-Steuereinheit (E2) erfasste Geschwindigkeit des Fahrzeugs unter einem Schwellenwert liegt.

3. Kraftfahrzeug nach Anspruch 2, **dadurch gekennzeichnet, dass** die Hauptsteuereinheit (E) dazu eingerichtet ist, die Berechnung des Nickwinkels (PitchAngle) des Kraftfahrzeugs nach einer voreingestellten Verzögerung in Bezug auf den Abfall der Geschwindigkeit unter den Schwellenwert auszuführen, um zu ermöglichen, dass die Nickschwingungen des Kraftfahrzeugs enden.

4. Kraftfahrzeug nach Anspruch 3, **dadurch gekennzeichnet, dass** die Hauptsteuereinheit (E) dazu eingerichtet ist, die Berechnung des Nickwinkels (Pitch) des Kraftfahrzeugs in Bezug auf eine horizontale Ebene auf der Grundlage der folgenden Gleichung auszuführen:

$$(Pitch)_{deg} = \left( \tan^{-1} \left( \frac{Long_F}{\sqrt{g^2 - Long_F{}^2}} \right) \right)_{rad} \cdot \frac{180}{\pi}$$

wobei gilt:

$(Pitch)_{deg}$ ist der in Grad ausgedrückte Nickwinkel in Bezug auf eine horizontale Ebene;

$Long_F$ ist ein gefilterter Wert der Längsbeschleunigung des Kraftfahrzeugs, die von der Airbag-Steuereinheit (E1) des Kraftfahrzeugs erfasst wird; und
g ist die Erdbeschleunigung.

5. Kraftfahrzeug nach Anspruch 1, **dadurch gekennzeichnet, dass** die Hauptsteuereinheit (E) dazu eingerichtet ist, einen Wert des Nickwinkels (PitchAngle) in Bezug auf die Straße durch Subtrahieren eines gefilterten Werts ($Slope_F$) des Steigungswinkels (Slope) der Straße, der von der Bremsanlagen-Steuereinheit (E2) erfasst wird, von dem berechneten Wert des Nickwinkels (Pitch) zu berechnen, und dadurch, dass die Hauptsteuereinheit (E) darüber hinaus dazu eingerichtet ist, ein Steuersignal (S) an die Steuereinheit (4) der Scheinwerfereinheit (2) zu senden, das von der Winkeldifferenz (DeltaPitch) zwischen dem Wert des Nickwinkels (PitchAngle) in Bezug auf die Straße und einem Versatzwert abhängt, der einem Anfangswert des Nickwinkels entspricht, der in einem Schritt zur Kalibrierung der in das Kraftfahrzeug eingebauten Scheinwerfereinheit (2) bestimmt wird.

6. Kraftfahrzeug nach Anspruch 4, **dadurch gekennzeichnet, dass** die Hauptsteuereinheit (E) dazu eingerichtet ist, den gefilterten Wert ($Long_F$) der Längsbeschleunigung des Kraftfahrzeugs mit einer iterativen Berechnung auf der Grundlage der folgenden Gleichung zu erhalten:

$$\text{Long}_F[N \cdot T] = \alpha \cdot \text{Long}_F[(N-1) \cdot T] + (1-\alpha) \cdot \text{Long}\,[N \cdot T]$$

wobei gilt:

$\alpha$ ist ein Filterparameter im Bereich zwischen 0,75 und 1,00;
N ist die Iterationszahl; und
T ist der Zeitpunkt der Abtastung des Werts der Längsbeschleunigung (Long), die von der Airbag-Steuereinheit (E1) erfasst wird.

**7.** Kraftfahrzeug nach Anspruch 5, **dadurch gekennzeichnet, dass** die Hauptsteuereinheit (E) dazu eingerichtet ist, den gefilterten Wert (Slope$_F$) des Steigungswinkels (Slope) der Straße, der von der Bremsanlagen-Steuereinheit (E2) erfasst wird, mithilfe einer iterativen Berechnung auf der Grundlage der folgenden Gleichung zu erhalten:

$$\text{Slope}_F[N \cdot T] = \alpha \cdot \text{Slope}_F[(N - 1) \cdot T] + (1 - \alpha) \cdot \text{Slope}[N \cdot T]$$

wobei N die Iterationszahl ist und T der Zeitpunkt der Abtastung des Werts des Steigungswinkels (Slope) der Straße ist, der von der Bremsanlagen-Steuereinheit (E2) erfasst wird.

**8.** Kraftfahrzeug nach Anspruch 1, **dadurch gekennzeichnet, dass** die Hauptsteuereinheit (E) dazu eingerichtet ist, ein Steuersignal (S) zu erzeugen, das einen Prozentwert enthält, der die Einstellposition der Scheinwerfereinheit repräsentiert, wobei der Prozentwert auf der Grundlage einer Tabelle bestimmt wird, die unterschiedlichen Bereichen der oben genannten Winkeldifferenz (DeltaPitch) unterschiedliche Prozentwerte zuordnet, wobei jeder Prozentwert einem jeweiligen Wertebereich der Winkeldifferenz (DeltaPitch) entspricht.

**9.** Kraftfahrzeug nach einem der vorhergehenden Ansprüche, **dadurch gekennzeichnet, dass** die Hauptsteuereinheit dazu eingerichtet ist, eine Zustandsmaschine-Strategie zu implementieren, die umfasst:

- einen ANLAUF-Zustand, der beim Einschalten des Kraftfahrzeugs aktiviert wird, wobei als Wert des Steigungswinkels der Straße der zuletzt vor dem vorherigen Ausschalten des Kraftfahrzeugs gespeicherte Wert angenommen wird;
- einen BETRIEB-Zustand, der aktiviert wird, wenn die Geschwindigkeit des Fahrzeugs unter einem Schwellenwert liegt, wobei die Hauptsteuereinheit (E) das oben genannte Steuersignal (S) auf der Grundlage der oben genannten Berechnung ausgibt und die resultierende Einstellposition der Scheinwerfereinheit (2) und den Wert des Steigungswinkels (Slope) der Straße speichert;
- einen INAKTIVITÄT-Zustand, der aktiviert wird, wenn die Geschwindigkeit des Fahrzeugs über dem oben genannten Schwellenwert liegt, wobei die Hauptsteuereinheit die zuletzt eingestellte Position der Scheinwerfereinheit (2) beibehält; und
- einen FEHLER-Zustand, der aktiviert wird, wenn eine Fehlerbedingung vorliegt, wobei die Hauptsteuereinheit die Position der Scheinwerfereinheit (2) auf einen vordefinierten Sicherheitswert einstellt und sie als die zuletzt eingestellte Position speichert.

**10.** Verfahren zum Steuern der Abstrahlrichtung einer Scheinwerfereinheit (2) eines Kraftfahrzeugs,

wobei die Scheinwerfereinheit (2) umfasst:

- einen elektrischen Stellantrieb (3) zum Einstellen der Neigung des von der Scheinwerfereinheit abgestrahlten Lichtbündels; und
- eine elektronische Steuereinheit (4), die mit der Scheinwerfereinheit (2) verbunden und dazu eingerichtet ist, ein Steuersignal (S) zu empfangen und den elektrischen Stellantrieb (3) der Scheinwerfereinheit (2) zum Einstellen der Neigung des Lichtbündels in Abhängigkeit von dem Steuersignal (S) zu aktivieren,

und wobei das Kraftfahrzeug umfasst:

- eine elektronische Hauptsteuereinheit (E) des Kraftfahrzeugs,
- ein System aus einem oder mehreren Kraftfahrzeug-Airbags, umfassend eine elektronische Airbag-Steuereinheit (E1); und
- eine Kraftfahrzeug-Bremsanlage, umfassend eine elektronische Bremsanlagen-Steuereinheit (E2),
- wobei die Hauptsteuereinheit (E) des Kraftfahrzeugs von der Airbag-Steuereinheit (E1) Informationen über einen Wert der Längsbeschleunigung (Long) des Kraftfahrzeugs erhält und von der Steuereinheit (E2) der Kraftfahrzeug-Bremsanlage Informationen über einen Wert der Geschwindigkeit (V) des Kraftfahrzeugs erhält,

wobei das Verfahren **dadurch gekennzeichnet ist, dass** es umfasst:

- Berechnen durch die Hauptsteuereinheit (E) des Kraftfahrzeugs des Werts des Nickwinkels (PitchAngle) des Kraftfahrzeugs, der als die Neigung der Längsachse (X) des Kraftfahrzeugs gegenüber der Straße (6) definiert ist, ausschließlich auf der Grundlage der Werte der Längsbeschleunigung (Long) des Kraftfahrzeugs, der Geschwindigkeit (V) des Kraftfahrzeugs und des Steigungswinkels (Slope) der Straße; und
- Erzeugen des Steuersignals (S) für die Steuereinheit (4) der Scheinwerfereinheit (2) auf der Grundlage des berechneten Werts des Nickwinkels (PitchAngle) des Kraftfahrzeugs, und
- wobei die Hauptsteuereinheit (E) des Kraftfahrzeugs Informationen über den Wert des Steigungswinkels (Slope) der Straße von der Steuereinheit (E2) der Bremsanlage des Kraftfahrzeugs erhält.

11. Verfahren nach Anspruch 10, **dadurch gekennzeichnet, dass** die Berechnung des Nickwinkels (PitchAngle) des Kraftfahrzeugs von der Hauptsteuereinheit (E) nur dann ausgeführt wird, wenn die von der Bremsanlagen-Steuereinheit (E2) erfasste Geschwindigkeit des Fahrzeugs unter einem Schwellenwert liegt.

12. Verfahren nach Anspruch 11, **dadurch gekennzeichnet, dass** die Berechnung des Nickwinkels (PitchAngle) des Kraftfahrzeugs von der Hauptsteuereinheit (E) nach einer voreingestellten Verzögerung in Bezug auf den Abfall der Geschwindigkeit unter den Schwellenwert ausgeführt wird, um zu ermöglichen, dass die Nickschwingungen des Kraftfahrzeugs enden.

13. Verfahren nach Anspruch 12, **dadurch gekennzeichnet, dass** die Berechnung des Nickwinkels (Pitch) des Kraftfahrzeugs in Bezug auf eine horizontale Ebene von der Hauptsteuereinheit (E) auf der Grundlage der folgenden Gleichung ausgeführt wird:

$$(Pitch)_{deg} = \left( \tan^{-1} \left( \frac{Long_F}{\sqrt{g^2 - Long_F{}^2}} \right) \right)_{rad} \cdot \frac{180}{\pi}$$

wobei gilt:

$(Pitch)_{deg}$ ist der in Grad ausgedrückte Nickwinkel in Bezug auf eine horizontale Ebene;
$Long_F$ ist ein gefilterter Wert der Längsbeschleunigung des Kraftfahrzeugs, die von der Airbag-Steuereinheit (E1) des Kraftfahrzeugs erfasst wird; und
$g$ ist die Erdbeschleunigung.

14. Verfahren nach Anspruch 10, **dadurch gekennzeichnet, dass** es die Berechnung durch die Hauptsteuereinheit (E) eines Wert des Nickwinkels (PitchAngle) in Bezug auf die Straße durch Subtrahieren eines gefilterten Werts (Slope$_F$) des Steigungswinkels (Slope) der Straße, der von der Bremsanlagen-Steuereinheit (E2) erfasst wird, von dem berechneten Wert des Nickwinkels (Pitch) umfasst, und dadurch, dass das Verfahren ferner das Senden durch die Hauptsteuereinheit (E) eines Steuersignals (S) an die Steuereinheit (4) der Scheinwerfereinheit (2) umfasst, das von der Winkeldifferenz (DeltaPitch) zwischen dem Wert des Nickwinkels (PitchAngle) in Bezug auf die Straße und einem Versatzwert abhängt, der einem Anfangswert des Nickwinkels entspricht, der in einem Schritt zur Kalibrierung der in das Kraftfahrzeug eingebauten Scheinwerfereinheit (2) bestimmt wird.

15. Verfahren nach Anspruch 13, **dadurch gekennzeichnet, dass** es das Erhalten durch die Hauptsteuereinheit (E) des gefilterten Werts (Long$_F$) der Längsbeschleunigung (Long) des Kraftfahrzeugs mit einer iterativen Berechnung auf der Grundlage der folgenden Gleichung umfasst:

$$\text{Long}_F[N \cdot T] = \alpha \cdot \text{Long}_F[(N - 1) \cdot T] + (1 - \alpha) \cdot \text{Long}\,[N \cdot T]$$

wobei gilt:

$\alpha$ ist ein Filterparameter im Bereich zwischen 0,75 und 1,00;
$N$ ist die Iterationszahl; und
$T$ ist der Zeitpunkt der Abtastung des Werts der Längsbeschleunigung (Long), die von der Airbag-Steuereinheit (E1) erfasst wird.

16. Verfahren nach Anspruch 14, **dadurch gekennzeichnet, dass** es das Erhalten durch die Hauptsteuereinheit (E) des gefilterten Werts (Slope$_F$) des Steigungswinkels (Slope) der Straße, der von der Bremsanlagen-Steuereinheit (E2) erfasst wird, mithilfe einer iterativen Berechnung auf der Grundlage der folgenden Gleichung umfasst:

$$\text{Slope}_F[N \cdot T] = \alpha \cdot \text{Slope}_F[(N - 1) \cdot T] + (1 - \alpha) \cdot \text{Slope}[N \cdot T]$$

wobei N die Iterationszahl ist und T der Zeitpunkt der Abtastung des Werts des Steigungswinkels (Slope) der Straße ist, der von der Bremsanlagen-Steuereinheit (E2) erfasst wird.

17. Verfahren nach Anspruch 10, **dadurch gekennzeichnet, dass** die Hauptsteuereinheit (E) dazu eingerichtet ist, ein Steuersignal (S) zu erzeugen, das einen Prozentwert enthält, der die Einstellposition der Scheinwerfereinheit repräsentiert, wobei der Prozentwert auf der Grundlage einer Tabelle bestimmt wird, die unterschiedlichen Bereichen der oben genannten Winkeldifferenz (DeltaPitch) unterschiedliche Prozentwerte zuordnet, wobei jeder Prozentwert einem jeweiligen Wertebereich der Winkeldifferenz (DeltaPitch) entspricht.

18. Verfahren nach einem der vorhergehenden Ansprüche 10 bis 17, **dadurch gekennzeichnet, dass** sie das Implementieren durch die Hauptsteuereinheit (E) einer Zustandsmaschine-Strategie umfasst, die umfasst:

- einen ANLAUF-Zustand, der beim Einschalten des Kraftfahrzeugs unverzüglich aktiviert wird, wobei als Wert des Steigungswinkels der Straße der zuletzt vor dem vorherigen Ausschalten des Kraftfahrzeugs gespeicherte Wert angenommen wird;
- einen BETRIEB-Zustand, der aktiviert wird, wenn die Geschwindigkeit des Fahrzeugs unter einem Schwellenwert liegt, wobei die Hauptsteuereinheit (E) das oben genannte Steuersignal (S) auf der Grundlage der oben genannten Berechnung ausgibt und die resultierende Einstellposition der Scheinwerfereinheit (2) und den Wert des Steigungswinkels (Slope) der Straße speichert;
- einen INAKTIVITÄT-Zustand, der aktiviert wird, wenn die Geschwindigkeit des Fahrzeugs über dem oben genannten Schwellenwert liegt, wobei die Hauptsteuereinheit die zuletzt eingestellte Position der Scheinwerfereinheit (2) beibehält; und
- einen FEHLER-Zustand, der aktiviert wird, wenn eine Fehlerbedingung vorliegt, wobei die Hauptsteuereinheit die Position der Scheinwerfereinheit (2) auf einen vordefinierten Sicherheitswert einstellt und sie als die zuletzt eingestellte Position speichert.

**Revendications**

1. Véhicule automobile, comprenant au moins une unité de phare (2) qui comporte :

- un actionneur électrique (3) pour régler l'inclinaison du faisceau lumineux émis par l'unité de phare ; et
- une unité de commande électronique (4) associée à l'unité de phare (2) et configurée pour recevoir un signal de commande (S) et pour activer l'actionneur électrique (3) de l'unité de phare (2) de manière à régler l'inclinaison du faisceau de lumière en fonction dudit signal de commande (S),

dans lequel le véhicule automobile comprend en outre :

- une unité de commande électronique principale (E) du véhicule automobile ;
- un système d'un ou plusieurs coussins de sécurité gonflables de véhicule automobile, comportant une unité de commande électronique de coussin de sécurité gonflable (E1) ; et
- un système de freinage de véhicule automobile, comportant une unité de commande électronique de système de freinage (E2),
dans lequel
- l'unité de commande principale (E) du véhicule automobile est configurée pour obtenir une information sur une valeur de l'accélération longitudinale (Long) du véhicule automobile en provenance de l'unité de commande de coussin de sécurité gonflable (E1) et pour obtenir une information sur une valeur de la vitesse du véhicule automobile (V) en provenance de l'unité de commande de système de freinage de véhicule automobile (E2),

ledit véhicule étant **caractérisé en ce que** :

- l'unité de commande principale (E) du véhicule automobile est configurée pour calculer la valeur de l'angle de tangage (PitchAngle) du véhicule automobile, définie comme une inclinaison de l'axe longitudinal (X) du véhicule automobile par rapport à la route (6), exclusivement sur la base des valeurs de l'accélération longitudinale (Long) du véhicule automobile, de la vitesse (V) du véhicule automobile, et de l'angle de pente (Slope) de la route, et pour générer ledit signal de commande (S) pour l'unité de commande (4) de l'unité de phare (2) sur la base de ladite valeur calculée de l'angle de tangage (PitchAngle) du véhicule automobile ;
- l'unité de commande principale (E) du véhicule automobile est configurée pour obtenir une information sur ladite valeur de l'angle de pente (Slope) de la route à partir de l'unité de commande du système de freinage de véhicule automobile (E2).

2. Véhicule automobile selon la revendication 1, **caractérisé en ce que** l'unité de commande principale (E) est configurée pour effectuer le calcul de l'angle de tangage (PitchAngle) du véhicule automobile uniquement lorsque la vitesse du véhicule détectée par ladite unité de commande de système de freinage (E2) est au-dessous d'une valeur seuil.

3. Véhicule automobile selon la revendication 2, **caractérisé en ce que** l'unité de commande principale (E) est configurée pour effectuer le calcul de l'angle de tangage (PitchAngle) du véhicule automobile après un délai prédéfini par rapport au moment où des chutes de vitesse inférieure à la valeur seuil pour permettre aux oscillations de tangage du véhicule automobile de s'estomper.

4. Véhicule automobile selon la revendication 3, **caractérisé en ce que** l'unité de commande principale (E) est configurée pour effectuer le calcul de l'angle de tangage (Pitch) du véhicule automobile par rapport à un plan horizontal sur la base l'équation suivante :

$$(Pitch)_{deg} = (tan^{-1}(\frac{Long_F}{\sqrt{g^2 - Long_F{}^2}}))_{rad} \cdot \frac{180}{\pi}$$

où:

- «$(Pitch)_{deg}$» est l'angle de pas exprimé en degrés, par rapport à un plan horizontal ;
- «$Long_F$» est une valeur filtrée de l'accélération longitudinale du véhicule automobile détectée par l'unité de commande de coussin de sécurité gonflable de véhicule automobile (E1) ; et
- « g » est l'accélération de la gravité.

5. Véhicule automobile selon la revendication 1, **caractérisé en ce que** l'unité de commande principale (E) est configurée pour calculer une valeur de l'angle de tangage (PitchAngle) par rapport à la route en soustrayant de la valeur calculée de l'angle de pas (Pitch) une valeur filtrée ($Slope_F$) de l'angle de pente (Slope) de la route détectée par l'unité de commande de système de freinage (E2), et **en ce que** l'unité de commande principale (E) est en outre configurée pour envoyer un signal de commande (S) vers l'unité de commande (4) de l'unité de phare (2) qui dépend de la différence angulaire (DeltaPitch) entre ladite valeur de l'angle de tangage par rapport à la route (PitchAngle) et une valeur de décalage correspondant à une valeur initiale de l'angle de tangage déterminée lors d'une étape d'étalonnage de l'unité de phare (2) montée sur le véhicule automobile.

6. Véhicule automobile selon la revendication 4, **caractérisé en ce que** ladite unité de commande principale (E) est configurée pour obtenir ladite valeur filtrée ($Long_F$) de l'accélération longitudinale du véhicule automobile avec un calcul itératif sur la base de l'équation suivante :

$$Long_F[N.T] = \alpha . Long_F[(N-1).T] + (1-\alpha) . Long[N.T]$$

où :

- « $\alpha$ » est un paramètre de filtrage, dans la plage entre 0,75 et 1,00 ;
- « N » est le numéro d'itération ; et
- « T » est le temps d'échantillonnage de la valeur de l'accélération longitudinale (Long) détectée par l'unité de commande de coussin de sécurité gonflable (E1).

**7.** Véhicule automobile selon la revendication 5, **caractérisé en ce que** ladite unité de commande principale (E) est configurée pour obtenir ladite valeur filtrée (Slope$_F$) de l'angle de pente (Slope) de la route détectée par l'unité de commande de système de freinage (E2) au moyen d'un calcul itératif sur la base de l'équation suivante :

$$Slope_F[N.T] = \alpha.Slope_F[(N-1).T] + (1-\alpha).Slope[N.T]$$

où « N » est le numéro d'itération et « T » est le temps d'échantillonnage de la valeur de l'angle de pente de la route (Slope) détectée par l'unité de commande de système de freinage (E2).

**8.** Véhicule automobile selon la revendication 1, **caractérisé en ce que** l'unité de commande principale (E) est configurée pour générer un signal de commande (S) qui contient une valeur en pourcentage représentant la position de réglage de l'unité de phare, ladite valeur en pourcentage étant déterminée sur la base d'une table qui attribue différentes valeurs en pourcentage à différentes plages de la différence angulaire susmentionnée (DeltaPitch), chaque valeur en pourcentage correspondant à une plage respective de valeurs de ladite différence angulaire (DeltaPitch).

**9.** Véhicule automobile selon l'une quelconque des revendications précédentes, **caractérisé en ce que** l'unité de commande principale est configurée pour mettre en oeuvre une stratégie d'état-machine, comprenant :

- un état START-UP, qui est activé lors de la mise au contact du véhicule automobile, où l'on suppose que la valeur de l'angle de pente de la route est la dernière valeur stockée avant l'arrêt précédent du véhicule automobile ;
- un état RUN, qui est activé lorsque la vitesse du véhicule est inférieure à une valeur seuil, où l'unité de commande principale (E) délivre le signal de commande susmentionné (S) sur la base du calcul susmentionné et stocke la position résultante su réglage de l'unité de phare (2) et la valeur de l'angle de pente (Slope) de la route ;
- un état IDLE, qui est activé lorsque la vitesse du véhicule est supérieure à la valeur seuil susmentionnée, où l'unité de commande principale maintient la dernière position réglée de l'unité de phare (2) ; et
- un état FAULT, qui est activé lorsqu'une condition de défaillance est présente, où l'unité de commande principale règle la position de l'unité de phare (2) à une valeur de sécurité prédéfinie et la stocke en tant que dernière position réglée.

**10.** Procédé de commande de la direction d'émission d'une unité de phare (2) d'un véhicule automobile,

dans lequel l'unité de phare (2) comprend :

- un actionneur électrique (3) pour régler l'inclinaison du faisceau lumineux émis par l'unité de phare ; et
- une unité de commande électronique (4) associée à l'unité de phare (2) et configurée pour recevoir un signal de commande (S) et pour activer l'actionneur électrique (3) de l'unité de phare (2) de manière à régler l'inclinaison du faisceau de lumière en fonction dudit signal de commande (S),

dans lequel le véhicule automobile comprend en outre :

- une unité de commande électronique principale (E) du véhicule automobile ;
- un système d'un ou plusieurs coussins de sécurité gonflables de véhicule automobile, comportant une unité de commande électronique de coussin de sécurité gonflable (E1) ; et
- un système de freinage de véhicule automobile, comportant une unité de commande électronique de système de freinage (E2),
- dans lequel l'unité de commande principale (E) du véhicule automobile obtient une information sur une valeur de l'accélération longitudinale (Long) du véhicule automobile en provenance de l'unité de commande de coussin de sécurité gonflable (E1) et obtient une information sur une valeur de la vitesse du véhicule automobile (V) en provenance de l'unité de commande de système de freinage de véhicule automobile (E2),

ledit procédé étant **caractérisé en ce qu'**il comprend :

- le calcul, via ladite unité de commande principale (E) du véhicule automobile, de la valeur de l'angle de tangage (PitchAngle) du véhicule automobile, définie comme une inclinaison de l'axe longitudinal (X) du véhicule automobile par rapport à la route (6), exclusivement sur la base des valeurs de l'accélération longitudinale (Long) du véhicule automobile, de la vitesse (V) du véhicule automobile, et de l'angle de pente (Slope) de la route, et

- la génération dudit signal de commande (S) pour l'unité de commande (4) de l'unité de phare (2) sur la base de ladite valeur calculée de l'angle de tangage (PitchAngle) du véhicule automobile ; et
- dans lequel l'unité de commande principale (E) du véhicule automobile obtient une information sur ladite valeur de l'angle de pente (Slope) de la route à partir de l'unité de commande du système de freinage de véhicule automobile (E2).

11. Procédé selon la revendication 10, **caractérisé en ce que** le calcul de l'angle de tangage (PitchAngle) du véhicule automobile est effectué par l'unité de commande principale (E) uniquement lorsque la vitesse du véhicule détectée par ladite unité de commande de système de freinage (E2) est inférieure à une valeur seuil.

12. Procédé selon la revendication 11, **caractérisé en ce que** le calcul de l'angle de tangage (PitchAngle) du véhicule automobile est effectué par l'unité de commande principale (E) après un délai prédéfini par rapport au moment où la vitesse chute en dessous du valeur seuil afin de permettre aux oscillations de tangage du véhicule automobile de s'estomper.

13. Procédé selon la revendication 12, **caractérisé en ce que** le calcul de l'angle de tangage (Pitch) du véhicule automobile par rapport à un plan horizontal est effectué par l'unité de commande principale (E) sur la base de l'équation suivante :

$$(Pitch)_{deg} = (tan^{-1}(\frac{Long_F}{\sqrt{g^2 - Long_F{}^2}}))_{rad} \cdot \frac{180}{\pi}$$

où :

- « $(Pitch)_{deg}$ » est l'angle de pas exprimé en degrés, par rapport à un plan horizontal ;
- « $Long_F$ » est une valeur filtrée de l'accélération longitudinale du véhicule automobile détectée par l'unité de commande de coussin de sécurité gonflable de véhicule automobile (E1) ; et
- « g » est l'accélération de la gravité.

14. Procédé selon la revendication 10, **caractérisé en ce qu'**il comprend le calcul, via l'unité de commande principale (E), d'une valeur de l'angle de tangage (PitchAngle) par rapport à la route en soustrayant de la valeur calculée de l'angle de tangage (Pitch) une valeur filtrée ($Slope_F$) de l'angle de pente (Slope) de la route détecté par l' unité de commande de système de freinage (E2), et **en ce que** ledit procédé comprend en outre l'envoi, via l'unité de commande principale (E), d'un signal de commande (S) vers l'unité de commande (4) de l'unité de phare (2) qui dépend de la différence angulaire (DeltaPitch) entre ladite valeur de l'angle de tangage par rapport à la route (PitchAngle) et une valeur de décalage correspondant à une valeur initiale de l'angle de tangage déterminée lors d'une étape d'étalonnage de l'unité de phare (2) montée sur le véhicule automobile.

15. Procédé selon la revendication 13, **caractérisé en ce qu'**il comprend l'obtention, via l'unité de commande principale (E), de ladite valeur filtrée ($Long_F$) de l'accélération longitudinale du véhicule automobile avec un calcul itératif sur la base de l'équation suivante :

$$Long_F[N.T] = \alpha . Long_F[(N-1).T] + (1-\alpha). Long[N.T]$$

où :

- « $\alpha$ » est un paramètre de filtrage, dans la plage entre 0,75 et 1,00 ;
- « N » est le numéro d'itération ; et
- « T » est le temps d'échantillonnage de la valeur de l'accélération longitudinale (Long) détectée par l'unité de commande de coussin de sécurité gonflable (E1).

16. Procédé selon la revendication 14, **caractérisé en ce qu'**il comprend l'obtention, via l'unité de commande principale (E), de ladite valeur filtrée (Slope$_F$) de l'angle de pente (Slope) de la route détectée par l'unité de commande de système de freinage (E2) au moyen d'un calcul itératif sur la base de l'équation suivante :

$$Slope_F[N.T] = \alpha.Slope_F[(N-1).T] + (1-\alpha).Slope[N.T]$$

où « N » est le numéro d'itération et « T » est le temps d'échantillonnage de la valeur de l'angle de pente de la route (Slope) détectée par l'unité de commande de système de freinage (E2).

17. Procédé selon la revendication 1, **caractérisé en ce que** l'unité de commande principale (E) est configurée pour générer un signal de commande (S) qui contient une valeur en pourcentage représentant la position de réglage de l'unité de phare, ladite valeur en pourcentage étant déterminée sur la base d'une table qui attribue différentes valeurs en pourcentage à différentes plages de la différence angulaire susmentionnée (DeltaPitch), chaque valeur en pourcentage correspondant à une plage respective de valeurs de ladite différence angulaire (DeltaPitch).

18. Procédé selon l'une quelconque des revendications 10-17, **caractérisé en ce qu'**il comprend la mise en oeuvre, via l'unité de commande principale (E), d'une stratégie d'état-machine, comprenant :

- un état START-UP, qui est activé immédiatement lors de la mise au contact du véhicule automobile, où l'on suppose que la valeur de l'angle de pente de la route est la dernière valeur stockée avant l'arrêt précédent du véhicule automobile ;
- un état RUN, qui est activé lorsque la vitesse du véhicule est inférieure à une valeur seuil, où l'unité de commande principale (E) délivre le signal de commande susmentionné (S) sur la base du calcul susmentionné et stocke la position résultante su réglage de l'unité de phare (2) et la valeur de l'angle de pente (Slope) de la route ;
- un état IDLE, qui est activé lorsque la vitesse du véhicule est supérieure à la valeur seuil susmentionnée, où l'unité de commande principale maintient la dernière position réglée de l'unité de phare (2) ; et
- un état FAULT, qui est activé lorsqu'une condition de défaillance est présente, où l'unité de commande principale règle la position de l'unité de phare (2) à une valeur de sécurité prédéfinie et la stocke en tant que dernière position réglée.

# FIG. 1

# FIG. 2

# FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7599779 B2
- US 10001361 B2
- WO 2018065692 A1
- EP 3527453 A1
- WO 2019180331 A1
- DE 102015208795 B4
- EP 2708417 B1
- US 10471884 B2
- EP 33527453 B1
- EP 3689680 A1
- WO 2018091529 A1
- DE 202019100544 U1
- EP 3106346 A1
- US 10676016 B2
- EP 2963385 A1